(19) Europäisches Patentamt / European Patent Office / Office européen des brevets

(11) EP 2 237 217 A2

(12) EUROPEAN PATENT APPLICATION

(43) Date of publication:
06.10.2010 Bulletin 2010/40

(51) Int Cl.:
G06T 3/00 (2006.01)       H04N 7/26 (2006.01)
H04N 7/34 (2006.01)       H04N 7/50 (2006.01)

(21) Application number: 10158251.8

(22) Date of filing: 29.03.2010

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA ME RS

(30) Priority: 30.03.2009 US 414256

(71) Applicants:
• Sony Corporation
Minato-ku
Tokyo 108-0075 (JP)
• Sony Electronics Inc.
Park Ridge, NJ 07656 (US)

(72) Inventors:
• Gharavi-Alkhansari, Mohammad
Santa Clara
California 95051 (US)
• Tabatabai, Ali
Cupertino,
California 95014 (US)
• Visharam, Mohammed Zubair
Santa Clara
California 95050 (US)

(74) Representative: Scaddan, Gareth Casey
D Young & Co LLP
120 Holborn
London EC1N 2DY (GB)

(54) **Method and apparatus for intra-prediction**

(57) A method and apparatus for intra-prediction in a video encoder are described. An example relates to a method of intra-prediction for a group of samples in an image being coded. In some examples, the method includes: defining a target template for the group of samples; comparing the target template with affine transformations of candidate templates within a search area of the image; identifying at least one matching template of the candidate templates as matching the target template; determining a candidate group of samples based on the at least one matching template; and coding the group of samples using the candidate group of samples as a predictor.

200

DEFINE TARGET TEMPLATE FOR GROUP OF SAMPLES BEING CODED — 202

COMPARE TARGET TEMPLATE WITH AFFINE TRANSFORMATIONS OF CANDIDATE TEMPLATES WITHIN A SEARCH AREA OF THE IMAGE — 204

IDENTIFY MATCHING CANDIDATE TEMPLATE(S) AS MATCHING THE TARGET TEMPLATE — 206

DETERMINE CANDIDATE GROUP OF SAMPLES BASED ON THE MATCHING CANDIDATE TEMPLATE(S) — 208

CODE THE TARGET GROUP OF SAMPLES USING THE AFFINE TRANSFORMATION OF THE CANDIDATE GROUP OF SAMPLES AS A PREDICTOR — 210

FIG. 2

EP 2 237 217 A2

**Description**

**Field of the Invention**

The present invention relates generally to intra-prediction. More particularly, embodiments of the present invention relate to a method and apparatus for intra-prediction in a video encoder.

**Background of the Intention**

Video compression is used in many current and emerging products, such as digital television set-top boxes (STBs), high definition television (HDTV) decoders, digital versatile disk (DVD) players, BLU-RAY disc players, digital camcorders, personal computers, and the like. Without video compression, digital video content can be extremely large, making it difficult or even impossible for the digital video content to be efficiently stored, transmitted, or viewed. There are numerous video coding methods that compress digital video content. Consequently, video coding standards have been developed to standardize the various video coding methods so that the compressed digital video content is rendered in formats that a majority of video decoders can recognize. For example, the Motion Picture Experts Group (MPEG) and International Telecommunication Union (ITU-T) have developed video coding standards that are in wide use. Examples of these standards include the MPEG-1, MPEG-2 (ITU-T H.262), MPEG-4, ITU-T H.261, ITU-T H.263, and ITU-T H.264 standards.

Video encoding standards, such as MPEG standards, typically achieve data compression by utilizing various coding techniques, such as spatial and temporal prediction, transform and quantization, entropy encoding, and the like. Prediction in video encoders is typically includes both inter-prediction and intra-prediction for improving coding efficiency. Inter-prediction exploits the temporal correlation between images of video, whereas intra-prediction exploits the spatial correlation of pixels within an image of video. Both types of prediction are typically performed on blocks of pixels. For intra-prediction, the prediction of a block is formed by extrapolating from neighboring samples of previously coded and reconstructed blocks, and then the difference between the block and its prediction is coded. Such a technique, however, does not work well with images having complex textures. Furthermore, the farther the pixels being predicted are from the surrounding pixels, the greater the error in prediction.

Accordingly, there exists a need in the art for a method and apparatus for intra-prediction in a video encoder that addresses the aforementioned deficiencies.

**Summary of the Invention**

Various respective aspects and features of the invention are defined in the appended claims. Combinations of features from the dependent claims may be combined with features of the independent claims as appropriate and not merely as explicitly set out in the claims.

An embodiment of the invention relates to a method of intra-prediction for a group of samples in an image being coded. In some embodiments, the method includes: defining a target template for the group of samples; comparing the target template with affine transformations of candidate templates within a search area of the image; identifying at least one matching template of the candidate templates as matching the target template; determining a candidate group of samples based on the at least one matching template; and coding the group of samples using the candidate group of samples as a predictor.

Another embodiment of the invention relates to an apparatus for intra-prediction for a group of samples in an image being coded. In some embodiments, the apparatus includes: an encoder configured to code the group of samples using a candidate group of samples as a predictor; and a temporal/spatial prediction module, within the encoder, configured to: define a target template for the group of samples; compare the target template with affine transformations of candidate templates within a search area of the image; identify at least one matching template of the candidate templates as matching the target template; and determine the candidate group of samples based on the at least one matching template.

Another embodiment of the invention relates to an apparatus for intra-prediction for a group of samples in an image being coded. In some embodiments, the apparatus includes: means for defining a target template for the group of samples; means for comparing the target template with affine transformations of candidate templates within a search area of the image; means for identifying at least one matching template of the candidate templates as matching the target template; means for determining a candidate group of samples based on the at least one matching template; and means for coding the group of samples using the candidate group of samples as a predictor.

**Brief Description of the Drawings**

Embodiments of the invention will now be described with reference to the accompanying drawings, throughout which like parts are referred to by like references, and in which:

FIG. 1 is a block diagram depicting an exemplary video encoder in accordance with one or more embodiments of the invention;

FIG. 2 is a flow diagram depicting an exemplary embodiment of a method of intra-prediction in a video encoder in accordance with one or more embodiments of the invention;

FIG. 3 is a block diagram depicting an exemplary illustration of intra prediction in an image in accordance with one or more embodiments of the invention;

FIG. 4 is a flow diagram depicting an exemplary embodiment of a method for intra prediction of a target block in an image being coded in accordance with one or more embodiments of the invention;

FIG. 5 is a flow diagram depicting an exemplary embodiment of a method for intra prediction of a group of samples in an image being coded in accordance with one or more embodiments of the invention;

FIG. 6 is a flow diagram depicting another exemplary embodiment of a method for intra prediction of a group of samples in an image being coded in accordance with one or more embodiments of the invention;

FIG. 7 depicts exemplary templates that can be used in the intra prediction methods described herein in accordance with one or more embodiments of the invention; and

FIG. 8 is a flow diagram depicting another exemplary embodiment of a method for intra prediction of a group of samples in an image being coded in accordance with one or more embodiments of the invention.

**Description of the Example Embodiments**

It should be noted that although embodiments of the present invention are described within the context of H. 264/MPEG-4 AVC, the present invention is not so limited. Namely, the video encoder can be an H.264/MPEG-4 AVC compliant encoder or an encoder that is compliant to any other compression standards that are capable of exploiting the intra prediction scheme. Note that embodiments of the invention described below are not part of any compression standards presently known.

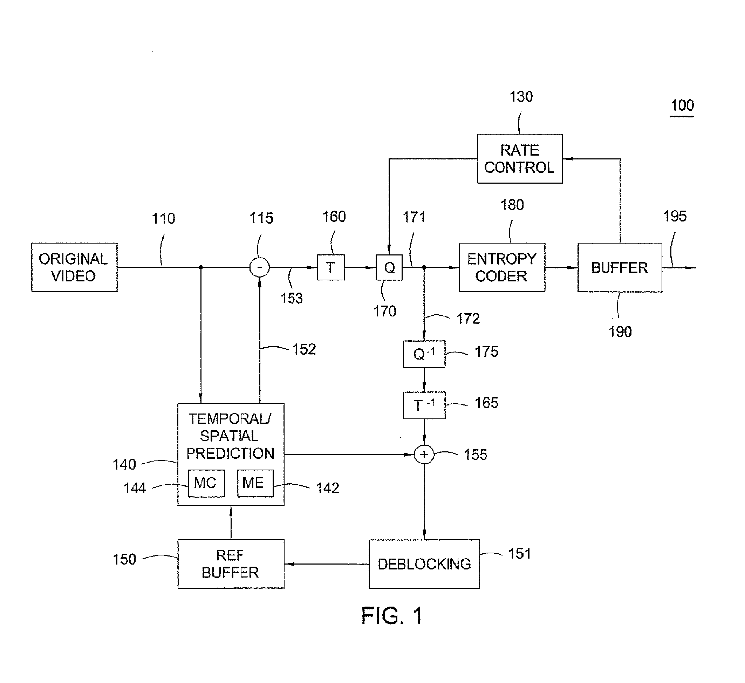

FIG. 1 is a block diagram depicting an exemplary video encoder 100 in accordance with one or more embodiments of the invention. The video encoder 100 comprises a temporal/spatial prediction module 140, a rate control module 130, a transform module 160, a quantization (Q) module 170, an entropy encoder 180, a buffer (BUF) 190, an inverse quantization ($Q^{-1}$) module 175, an inverse DCT transform ($T^{-1}$) module 165, a subtractor 115, a summer 155, a deblocking module 151, and a reference buffer 150. Although the video encoder 100 comprises a plurality of modules, those skilled in the art will appreciate that the functions performed by the various modules are not required to be isolated into separate modules as shown in FIG. 1.

Input video data comprises a sequence of pictures, where each picture is a field or frame (two interlaced fields) having an array of luminance (luma) samples and two arrays of chrominance (chroma) samples. Each picture can be further divided into slices, which can be divided into macroblocks, which can be divided into blocks of different sizes. The input video data is coupled to the temporal/spatial prediction module 140 via path 110. The temporal/spatial prediction module 140 may include a variable block motion estimation (ME) module 142 and a motion compensation (MC) module 144. Motion vectors from the ME module 142 are received by the MC module 144 for improving the efficiency of the prediction of sample values. Motion compensation involves a prediction that uses motion vectors to provide offsets into the past and/or future reference pictures containing previously decoded sample values that are used to form the prediction error. Namely, the temporal/spatial prediction module 140 uses previously decoded picture(s) and motion vectors to construct an estimate of the current picture being coded.

The temporal/spatial prediction module 140 may also perform spatial prediction processing, e.g., directional spatial prediction (DSP). Directional spatial prediction can be implemented for intra coding, for extrapolating the edges of the previously-decoded parts of the current picture and applying it in regions of pictures that are intra coded. This improves the quality of the prediction signal, and also allows prediction from neighboring areas that were not coded using intra coding.

Furthermore, prior to performing motion compensation prediction for a given block, a coding mode is to be selected. In the area of coding mode decision, MPEG provides a plurality of different coding modes. Generally, these coding modes are grouped into two broad classifications, inter coding and intra coding. Intra coding involves the coding of a block, macroblock, or slice in a picture using intra prediction, which is a prediction derived only from the same decoded picture. Conversely, inter coding involves the coding of a block, macroblock, or slice in a picture using inter prediction, which is a prediction derived from decoded picture(s) other than the current picture. Embodiments of an intra prediction process performed by the temporal/spatial prediction module 140 are described below.

Once a coding mode is selected, the temporal/spatial prediction module 140 generates a motion compensated prediction (predicted image) on path 152 of the contents of the block based on past and/or future reference pictures. This motion compensated prediction on path 152 is subtracted via the subtractor 115 from the video image on the path 110 in the current block to form an error signal or predictive residual signal on path 153. The predictive residual signal on the path 153 is passed to the transform module 160 for encoding.

The transform module 160 then applies a discrete cosine transform based (DCT-based) transform, Specifically, in H.264/MPEG-4 AVC, the transformation is applied to 4x4 blocks, where a separable integer transform is applied. An additional 2x2 transform is applied to the four DC coefficients of each chroma component. The resulting transformed coefficients are received by the quantization module 170, where the transform coefficients are quantized. H.264/MPEG-4 AVC uses scalar quantization.

The resulting quantized transformed coefficients are then decoded in the inverse quantization module 175 and the inverse DCT module 165 to recover the reference picture(s) that will be stored in reference buffer 150. In H.264/MPEG-4 AVC, the in-loop deblocking filter 151 is also employed to minimize blockiness.

The resulting quantized transformed coefficients from the quantization module 170 are also received by the entropy encoder 180 via signal connection 171. The entropy encoder 180 may perform context-adaptive variable length coding (CAVLC) or context-adaptive binary arithmetic coding (CABAC), where the two-dimensional block of quantized coefficients is scanned using a particular scanning mode, e.g., a "zig-zag" order, to convert it into a one-dimensional string of quantized transformed coefficients.

The data stream is received into the buffer 190, which is a first in first out (FIFO) memory. A consequence of using different picture types and variable length coding is that the overall bit rate into the buffer 190 is variable. Namely, the number of bits used to code each frame can be different. In applications that involve a fixed-rate channel, the buffer 190 can be used to match the encoder output to the channel for smoothing the bit rate. Thus, the output signal of the buffer 190 is a compressed representation of the input video image 110, where it is output via a path 195. The rate control module 130 serves to monitor and adjust the bit rate of the data stream entering the buffer 190 for preventing overflow and underflow on the decoder side (within a receiver or target storage device, not shown) after transmission of the data stream.

In some embodiments, the modules of the video encoder 100 can be implemented using hardware, such as one or more integrated circuits (ICs), discrete components, circuit boards, and the like. In some embodiments, one or more of the modules of the video encoder 100 may be implemented via software (e.g., a processor executing software to perform the functionality of the module(s)). In some embodiments, the modules of the video encoder 100 may be implemented using a combination of hardware and software.

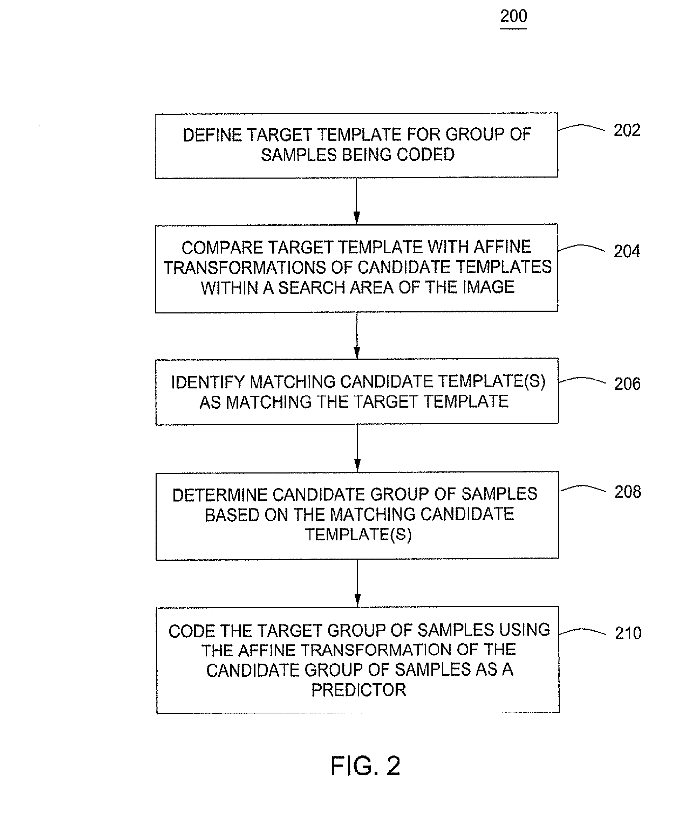

FIG. 2 is a flow diagram depicting an exemplary embodiment of a method 200 of intra-prediction in a video encoder in accordance with one or more embodiments of the invention. As discussed above, the video encoder 100 processes the input images on a block-by-block basis, where the blocks may be of various sizes of input samples. The method 200 may be performed for a group of samples in an image being coded. The method 200 begins at step 202, where a target template for the group of samples is defined. At step 204, the target template is compared with affine transformations of candidate templates within a search area of the image. At step 206, at least one matching template of the candidate templates is identified as matching the target template. At step 208, a candidate group of samples is determined based on the at least one matching template. At step 210, the group of samples is coded using the candidate group of samples as a predictor. Steps 202 through 208 of the method 200 may be performed by the temporal/spatial prediction module 140. Step 210 may be performed by the encoder 100, as described above. The encoder 100 may repeat the method 200 to intra-predict various other groups of samples in the image being coded and in any other image being coded. Aspects of the method 200 may be understood with reference to specific embodiments described below.

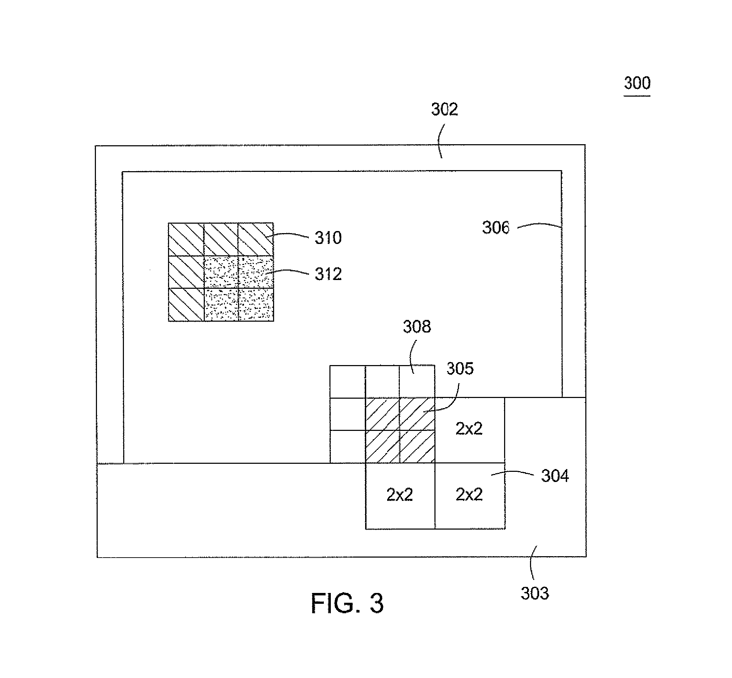

FIG. 3 is a block diagram depicting an exemplary illustration of intra prediction in an image 300 in accordance with one or more embodiments of the invention. The image 300 may be a particular picture being coded by the video encoder 100. The image 300 includes a portion 302 that has been previously coded and reconstructed, and a portion 303 that has yet to be coded. A block 304 is a current block being coded and is hence the target block to be predicted. In the present example, the block 304 includes an array of 4x4 samples. A search region 306 is established adjacent to the block 304 that includes previously coded and reconstructed samples of dimension y samples high and x samples wide, but excluding samples in the lower right that have not be coded yet. The block 304 is further divided into four 2x2 sub-blocks. A template 308 is established adjacent a target 2x2 sub-block 305 (the upper right sub-block in the present example). In the present example, the template 308 includes five previously coded and reconstructed samples occupying positions to the left and above the target 2x2 sub-block. Intra prediction proceeds by performing template matching in the search region 306 for the template 308. A candidate template 310 in the search region 306 defines a candidate 2x2 sub-block 312. The best candidate 2x2 sub-block is the one where the adjacent template most closely matches the template 308.

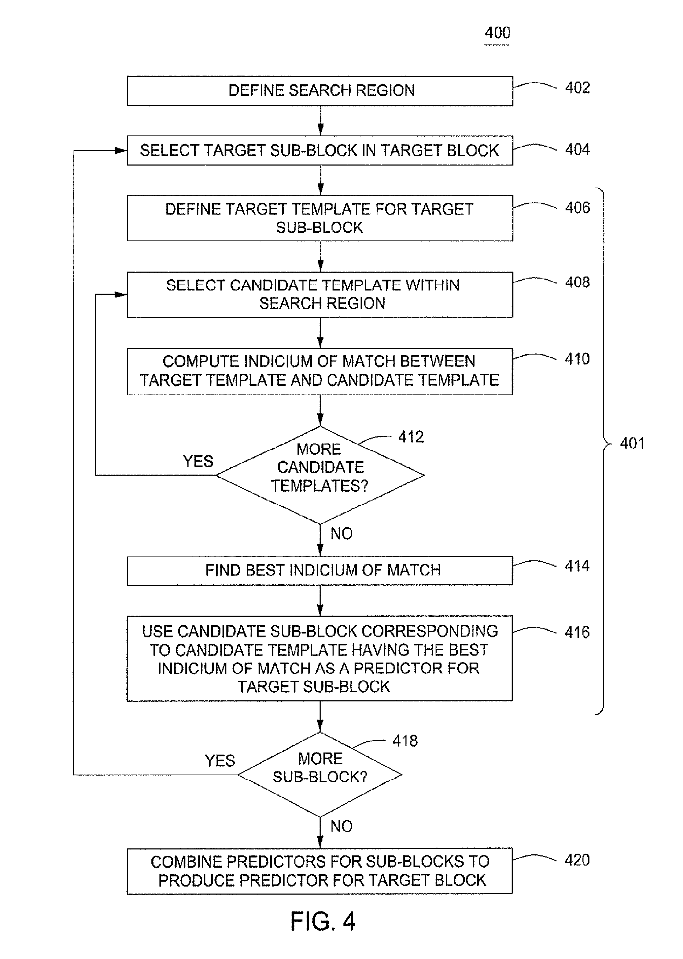

FIG. 4 is a flow diagram depicting an exemplary embodiment of a method 400 for intra prediction of a target block in an image being coded in accordance with one or more embodiments of the invention. The method 400 may be performed by the temporal/spatial prediction module 140 in the video encoder 100. Assume, for purposes of clarity by example, the target block is the block 304 in the image 300. The method 400 begins at step 402, a search region is defined (e.g., search region 306). At step 404, a target sub-block in the target block is selected (e.g., the 2x2 sub-block 305 in the block 304). A method 401 of intra prediction for a group of samples in an image being coded is then performed given the target sub-block as the group of samples.

The method 401 begins at step 406, where a target template is defined for the target sub-block (e.g., template 308 for the upper right 2x2 sub-block 305 in the block 304). At step 408, a candidate template is selected within the search region (e.g., candidate template 310). At step 410, an indicium of match between the target template and the candidate template is computed.

One indicium, commonly used in MPEG, is the sum of absolute differences (SAD). In some embodiments, rather than directly measuring the difference between templates using a SAD, an optimal affine transformation of the candidate template is found that minimizes a mean squared error (MSE) with respect to the target template. Use of the affine transformation may result in a smaller prediction error as compared not using the affine transformation, which advantageously results in less transform coefficients to be coded and transmitted to the decoder (i.e., coding efficiency is improved).

Notably, the target template may be represented by a vector with N samples (e.g., the template 308 has N=5 samples), i.e., $x = [x_1....x_N]$. Likewise, a candidate template may be represented by a vector with N samples, i.e., $y = [y_1....y_N]$. A matching indicium for a target template may be computed by finding an optimal affine transformation, x_hat, of y that minimizes:

$$\|x - (\alpha y + \beta)\|_2 \qquad\qquad\qquad\qquad (1),$$

where x_hat = $\alpha y + \beta$ is an affine transformation of y. In the problem, the coefficients $\alpha$ and $\beta$ are unknown. Techniques for minimizing an equation with two unknowns ($\alpha$ and $\beta$) are well known in the art. Equation (1) represents a mean squared error (MSE) of an affine transformation of the candidate template with respect to the target template. The optimal affine transformation is one that provides a minimum MSE (MMSE).

At step 412, a determination is made whether there are more candidate templates in the search region. If so, the method 400 returns to step 408, where another candidate template is selected. Otherwise, the method 400 proceeds to step 414. At step 414, the indicia of match between the all candidate templates and the template are analyzed to identify the best indicium. If an affine transform is used, the best candidate template is the one where equation (1) is closest to zero. At step 416, a candidate sub-block corresponding to the candidate template is defined and used as a predictor for the target sub-block (e.g., candidate sub-block 312). If an affine transform is used as an indicium of matching, the candidate sub-block is defined by affine transforming the sub-block adjacent the best candidate template in accordance with the coefficients $\alpha$ and $\beta$ of the optimal affine transform found for the best candidate template. Note that the method 401 of intra prediction may be performed on any group of samples in an image, where the current 2x2 sub-block is an example.

At step 418, a determination is made whether there are more sub-blocks in the target block. If so, the method 400 returns to step 404, where another target sub-block in the target block is selected. Otherwise, the method 400 proceeds to step 420. At step 420, predictors for each target sub-block are combined to produce a predictor for the target block.

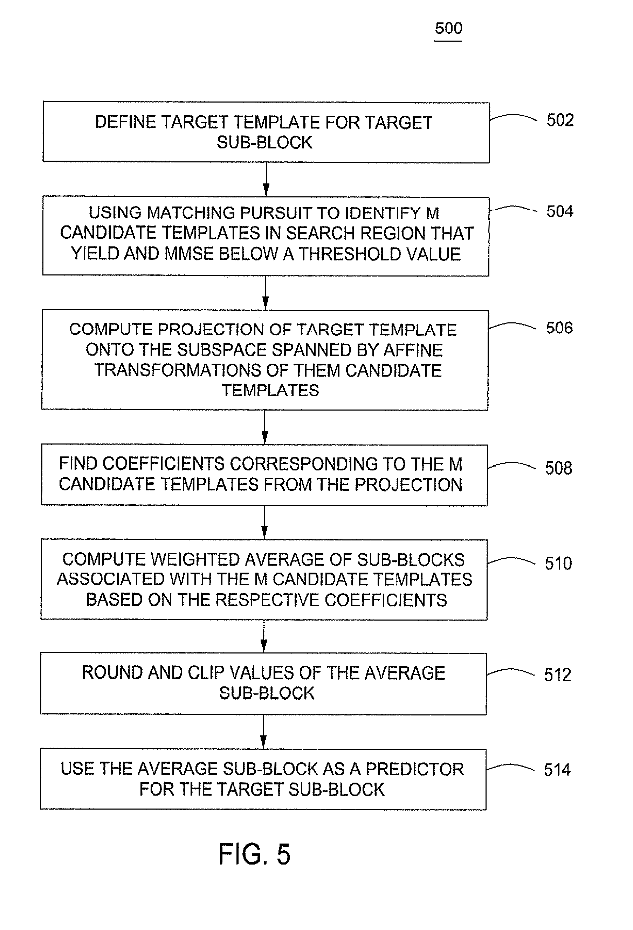

FIG. 5 is a flow diagram depicting another exemplary embodiment of a method 500 for intra prediction of a group of samples in an image being coded in accordance with one or more embodiments of the invention. The method 500 may be used as an alternative to the method 401 in the method 400 described above. For purposes of clarity, assume the group of samples is a target 2x2 sub-block 305 in the block 304. The method 500 begins at step 502, where a target template is defined for the target sub-block. The target template can be represented by a vector with N samples (e.g., the template 308 has N=5 samples). At step 504, M best matching candidate templates are identified in the search region, where M < N (but greater than one). M may be a predefined value. In some embodiments, an indicium of "best match" is the MMSE as set forth above in the method 401. For example, the M best candidate templates are those candidate templates having optimal affine transformations that result in the M smallest mean squared errors (e.g.,

equation (1) is closest to zero).

The target template and the affine transformations of the M best candidate templates ("transformed candidate templates") may be treated as vectors in an N-dimensional space. The transformed candidate templates thus span a subspace in the N-dimensional vector space. At step 506, a projection of the target template onto the subspace spanned by the candidate templates is computed. Mathematical techniques for computing a linear projection of a vector onto a subspace are known in the art. The projection produces coefficients respectively associated with the candidate templates that relate the target template to the candidate templates. At step 508, the coefficients for the M best candidate templates are found from the projection. At step 510, a weighted average of sub-blocks associated with the M best candidate templates is computed using the respective coefficients for the M best candidate templates as respective weights. At step 512, the values of the average sub-block are rounded and/or clipped to produce values in a valid range. At step 514, the average sub-block is used as a predictor for the target sub-block.

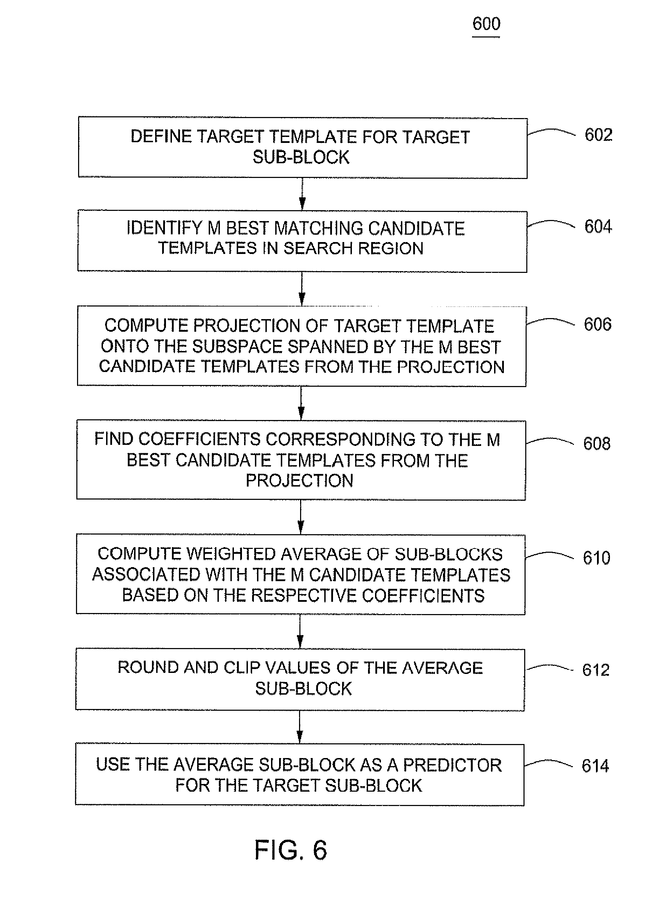

FIG. 6 is a flow diagram depicting another exemplary embodiment of a method 600 for intra prediction of a group of samples in an image being coded in accordance with one or more embodiments of the invention. The method 600 may be used as an alternative to the method 401 in the method 400 described above. For purposes of clarity, assume the group of samples is a target 2x2 sub-block 305 in the block 304. The method 600 begins at step 602, where a target template is defined for the target sub-block. The target template can be represented by a vector with N samples (e.g., the template 308 has N=5 samples). At step 604, identifying M candidate templates that yield a minimized mean squared error (MMSE) below a threshold value, where M < N (but greater than one). In some embodiments, an indicium of match is computed using an affine transformation as set forth above in the method 401. For example, the M candidate templates are those candidate templates the optimal affine transformations of which result in the MSE being below the threshold value (e.g., where equation (1) is below the threshold value). In some embodiments, the M candidate templates can be found using matching pursuit. As is known in the art, matching pursuit is a type of numerical technique for finding "best matching" projections of multidimensional data onto vector space. The target template can be projected onto various candidate templates in the search region using matching pursuit to find all candidate templates that satisfy the above criteria (e.g., where the MMSE is below a threshold value).

The target template and the M candidate templates ("transformed candidate templates") may be treated as vectors in an N-dimensional space. The transformed candidate templates thus span a subspace in the N-dimensional vector space. At step 606, a projection of the target template onto the subspace spanned by the transformed candidate templates is computed. Mathematical techniques for computing a linear projection of a vector onto a subspace are known in the art. The projection produces coefficients respectively associated with the M candidate templates that relate the target template to the M candidate templates. At step 608, the coefficients for the M candidate templates are found from the projection. At step 610, a weighted average of sub-blocks associated with the M candidate templates is computed using the respective coefficients for the M candidate templates as respective weights. At step 612, the values of the average sub-block are rounded and/or clipped to produce values in a valid range. At step 614, the average sub-block is used as a predictor for the target sub-block.

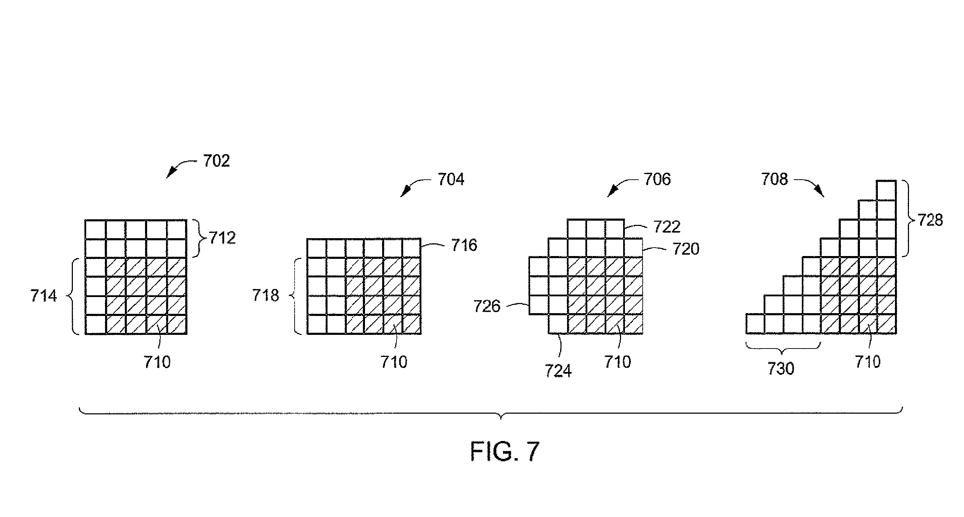

In the example of FIG. 3, the template 308 is defined as an L-shaped group of samples having a fixed width attached to the target sub-block 305 in the block 304. In some embodiments, target templates (and their corresponding candidate templates) in the methods described above may be generalized to arbitrary shapes with varying thicknesses. FIG. 7 depicts four exemplary templates 702 through 708 that can be used as alternatives to the fixed width, L-shaped template described above. In the present example, each of the templates 702 through 708 correspond to a 4x4 block of samples 710. The template 702 is L-shaped, but is thicker above the block 710 than on the left of the block 710. That is, the template 702 includes a 2x4 array 712 of samples above the block 710, and a 4x1 array 714 of samples to the left of the block 710. The template 704 is L-shaped, but is thicker on the left of the block 710 than above the block 710. That is, the template 704 includes a 1x4 array 798 of samples above the block 710, and a 4x2 array 718 of samples to the left of the block 710. The template 706 includes partial pyramids of samples above and to the left of the block 710. That is, the template 706 includes 5 samples 720 above and top-left corner and adjacent to the block 710, and three samples 722 centered above the samples 720; and 4 samples 724 left of and adjacent to the block 710, and three samples 726 centered left of the samples 724. The template 708 includes triangular groups of samples above and left of the block 710. For example, the template 708 includes a triangular group 728 of samples above and adjacent to the block 710, and a triangular group 730 of samples left of and adjacent to the block 710. Each of the triangular groups 728 and 730 include 4 samples, then 3 samples, then 2 samples, than one sample. Any of the above template shapes may be used in the embodiments of intra-coding using template matching described above.

In the embodiments described above, the candidate templates may be searched for in the search window with single pixel accuracy. Alternatively, in some embodiments, the search for candidate templates within the search region for any of the above-described embodiments may be performed with sub-pixel accuracy.

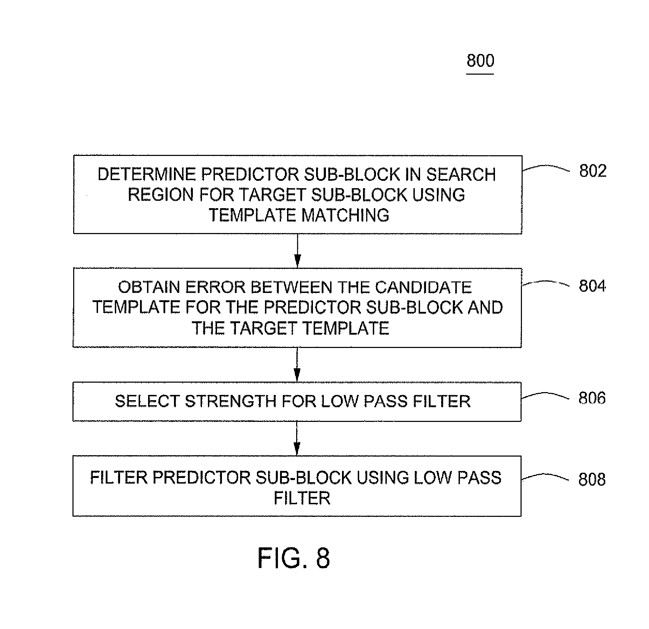

FIG. 8 is a flow diagram depicting another exemplary embodiment of a method 800 for intra prediction of a group of samples in an image being coded in accordance with one or more embodiments of the invention. The method 800 may be used as an alternative to the method 401 in the method 400 described above. For purposes of clarity, assume the group of samples is a target 2x2 sub-block 305 in the block 304. The method 800 begins at step 802, where a predictor sub-block in the search region for a target sub-block is determined using template matching. The predictor sub-block may be determined using any of the embodiments described above, including the method 401, the method 500, or the method 600. At step 804, an error between the candidate template(s) for the predictor sub-block and the target template is obtained. At step 806, a low pass filter strength is selected in response to the error. At step 808, the predictor sub-block is filtered using a low pass filter having the selected strength. For example, the strength of the low pass filter may be selected as an increasing function of the error between the candidate template(s) and the target template (in case of multiple candidate templates, an average error, the largest error, or the smallest error may be used). Thus, if a very good (low error) template match is found, the predictor sub-block is used with little change (e.g., a weak low-pass filter or without any low pass filter (zero strength)). Conversely, if the template matching error is high, a stronger low pass filter may be applied to the predictor sub-block.

Method and apparatus for intra-prediction in a video encoder has been described. In some embodiments, intra-prediction is preformed using a template matching technique. Notably, the indicium of match between candidate templates and a target template is computed using affine transformations. In some embodiments, embodiments of the intra-prediction process described herein can be used in video encoders compliant with MPEG standards. Notably, the template matching intra-prediction process can be used as another intra-prediction mode in an H.264 compliant video encoder, in addition to the modes defined by the standard.

While various embodiments have been described above, it should be understood that they have been presented by way of example only, and not limitation. Thus, the breadth and scope of a preferred embodiment should not be limited by any of the above-described exemplary embodiments, but should be defined only in accordance with the following claims. In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

**Claims**

1. A method of intra-prediction for a group of samples in an image being coded, comprising:

   defining a target template for the group of samples;
   comparing the target template with affine transformations of candidate templates within a search area of the image;
   identifying at least one matching template of the candidate templates as matching the target template;
   determining a candidate group of samples based on the at least one matching template; and
   coding the group of samples using the candidate group of samples as a predictor.

2. The method of claim 1, wherein the at least one matching template is a best matching template, and wherein the steps of comparing and identifying comprise:

   computing, for each candidate template of the candidate templates, an optimal affine transformation of the candidate template that minimizes a mean squared error (MSE) with respect to the target template; and
   identifying, as the best matching template, a respective one of the candidate templates the optimal affine transformation of which results in a smallest MSE.

3. The method of claim 2, wherein the step of determining comprises:

   applying coefficients of the optimal affine transformation of the best matching template to a group of samples associated with the best matching template to produce the candidate group of samples.

4. The method of any of claims 1, wherein the at least one matching template is M best matching templates, where M greater than one and less than a number of samples in the target template, and wherein the steps of comparing and identifying comprise:

   computing, for each candidate template of the candidate templates, an optimal affine transformation of the candidate template that minimizes a mean squared error (MSE) with respect to the target template; and
   identifying, as the M best matching templates, respective ones of the candidate templates the optimal affine transformations of which result in the M smallest mean squared errors.

5. The method of claim 4, wherein the step of determining comprises:

computing a linear projection of the target template onto a subspace defined by the M best matching templates;
computing a weighted average of groups of samples associated with the M best matching templates using coefficients of the linear projection as respective weights;
at least one of rounding or clipping samples of the weighted average to produce the candidate group of samples.

6. The method of claim 1, wherein the at least one matching template is M matching templates, where M greater than one and less than a number of samples in the target template, and wherein the steps of comparing and identifying comprise:

computing, for each candidate template of the candidate templates, an optimal affine transformation of the candidate template that minimizes a mean squared error (MSE) with respect to the target template; and
identifying, as the M matching templates, respective ones of the candidate templates the optimal affine transformations of which result in mean squared errors less than a threshold error.

7. The method of claim 6, wherein the M matching templates are identified using matching pursuit.

8. The method of claim 6, wherein the step of determining comprises:

computing a linear projection of the target template onto a subspace defined by the M matching templates;
computing a weighted average of groups of samples associated with the M matching templates using coefficients of the linear projection as respective weights;
at least one of rounding or clipping samples of the weighted average to produce the candidate group of samples.

9. Apparatus for intra-prediction for a group of samples in an image being coded, comprising:

an encoder configured to code the group of samples using a candidate group of samples as a predictor;
a temporal/spatial prediction module, within the encoder, configured to:

define a target template for the group of samples;
compare the target template with affine transformations of candidate templates within a search area of the image;
identify at least one matching template of the candidate templates as matching the target template;
determine the candidate group of samples based on the at least one matching template.

10. The apparatus of claim 9, wherein the at least one matching template is a best matching template, and wherein the temporal/spatial prediction module is configured to:

compute, for each candidate template of the candidate templates, an optimal affine transformation of the candidate template that minimizes a mean squared error (MSE) with respect to the target template; and
identify, as the best matching template, a respective one of the candidate templates the optimal affine transformation of which results in a smallest MSE.

11. The apparatus of claim 10, wherein the temporal/spatial prediction module is further configured to:

apply coefficients of the optimal affine transformation of the best matching template to a group of samples associated with the best matching template to produce the candidate group of samples.

12. The apparatus of claim 9, wherein the at least one matching template is M best matching templates, where M greater than one and less than a number of samples in the target template, and wherein the temporal/spatial prediction module is configured to:

compute, for each candidate template of the candidate templates, an optimal affine transformation of the candidate template that minimizes a mean squared error (MSE) with respect to the target template; and
identify, as the M best matching templates, respective ones of the candidate templates the optimal affine transformations of which result in the M smallest mean squared errors.

**13.** The apparatus of claim 12, wherein the temporal/spatiat prediction module is configured to:

compute a linear projection of the target template onto a subspace defined by the M best matching templates;
compute a weighted average of groups of samples associated with the M best matching templates using coefficients of the linear projection as respective weights;
at least one of round or clip samples of the weighted average to produce the candidate group of samples.

**14.** The apparatus of claim 9, wherein the at least one matching template is M matching templates, where M greater than one and less than a number of samples in the target template, and wherein the temporal/spatial prediction module is configured to:

compute, for each candidate template of the candidate templates, an optimal affine transformation of the candidate template that minimizes a mean squared error (MSE) with respect to the target template; and
identify, as the M matching templates, respective ones of the candidate templates the optimal affine transformations of which result in mean squared errors less than a threshold error.

**15.** The apparatus of claim 14, wherein the temporal/spatial prediction module is configured to:

compute a linear projection of the target template onto a subspace defined by the M matching templates;
compute a weighted average of groups of samples associated with the M matching templates using coefficients of the linear projection as respective weights;
at least one of round or clip samples of the weighted average to produce the candidate group of samples.

FIG. 1

200

```
┌─────────────────────────────────────────┐
│   DEFINE TARGET TEMPLATE FOR GROUP OF    │──── 202
│          SAMPLES BEING CODED             │
└─────────────────────────────────────────┘
                    │
                    ▼
┌─────────────────────────────────────────┐
│   COMPARE TARGET TEMPLATE WITH AFFINE    │──── 204
│ TRANSFORMATIONS OF CANDIDATE TEMPLATES   │
│     WITHIN A SEARCH AREA OF THE IMAGE    │
└─────────────────────────────────────────┘
                    │
                    ▼
┌─────────────────────────────────────────┐
│  IDENTIFY MATCHING CANDIDATE TEMPLATE(S) │──── 206
│      AS MATCHING THE TARGET TEMPLATE     │
└─────────────────────────────────────────┘
                    │
                    ▼
┌─────────────────────────────────────────┐
│  DETERMINE CANDIDATE GROUP OF SAMPLES    │──── 208
│     BASED ON THE MATCHING CANDIDATE      │
│              TEMPLATE(S)                 │
└─────────────────────────────────────────┘
                    │
                    ▼
┌─────────────────────────────────────────┐
│ CODE THE TARGET GROUP OF SAMPLES USING   │──── 210
│    THE AFFINE TRANSFORMATION OF THE      │
│   CANDIDATE GROUP OF SAMPLES AS A        │
│               PREDICTOR                   │
└─────────────────────────────────────────┘
```

FIG. 2

FIG. 3

400

```
┌─────────────────────────────────────┐
│        DEFINE SEARCH REGION          │──── 402
└─────────────────────────────────────┘
                  │
                  ▼
┌─────────────────────────────────────┐
│  SELECT TARGET SUB-BLOCK IN TARGET BLOCK │──── 404
└─────────────────────────────────────┘
                  │
                  ▼
┌─────────────────────────────────────┐
│    DEFINE TARGET TEMPLATE FOR TARGET │──── 406
│             SUB-BLOCK                │
└─────────────────────────────────────┘
                  │
                  ▼
┌─────────────────────────────────────┐
│   SELECT CANDIDATE TEMPLATE WITHIN   │──── 408
│          SEARCH REGION               │
└─────────────────────────────────────┘
                  │
                  ▼
┌─────────────────────────────────────┐
│  COMPUTE INDICIUM OF MATCH BETWEEN   │──── 410
│ TARGET TEMPLATE AND CANDIDATE TEMPLATE │
└─────────────────────────────────────┘
                  │
                  ▼
                  ◇── 412
         MORE CANDIDATE TEMPLATES?    YES
                  │ NO
                  ▼
┌─────────────────────────────────────┐
│      FIND BEST INDICIUM OF MATCH     │──── 414
└─────────────────────────────────────┘
                  │
                  ▼
┌─────────────────────────────────────┐
│  USE CANDIDATE SUB-BLOCK CORRESPONDING │──── 416
│  TO CANDIDATE TEMPLATE HAVING THE BEST │
│  INDICIUM OF MATCH AS A PREDICTOR FOR │
│          TARGET SUB-BLOCK            │
└─────────────────────────────────────┘
                  │
                  ▼
                  ◇── 418
          MORE SUB-BLOCK?    YES
                  │ NO
                  ▼
┌─────────────────────────────────────┐
│  COMBINE PREDICTORS FOR SUB-BLOCKS TO │──── 420
│   PRODUCE PREDICTOR FOR TARGET BLOCK  │
└─────────────────────────────────────┘
```

401

FIG. 4

500

| DEFINE TARGET TEMPLATE FOR TARGET SUB-BLOCK | 502 |

| USING MATCHING PURSUIT TO IDENTIFY M CANDIDATE TEMPLATES IN SEARCH REGION THAT YIELD AND MMSE BELOW A THRESHOLD VALUE | 504 |

| COMPUTE PROJECTION OF TARGET TEMPLATE ONTO THE SUBSPACE SPANNED BY AFFINE TRANSFORMATIONS OF THEM CANDIDATE TEMPLATES | 506 |

| FIND COEFFICIENTS CORRESPONDING TO THE M CANDIDATE TEMPLATES FROM THE PROJECTION | 508 |

| COMPUTE WEIGHTED AVERAGE OF SUB-BLOCKS ASSOCIATED WITH THE M CANDIDATE TEMPLATES BASED ON THE RESPECTIVE COEFFICIENTS | 510 |

| ROUND AND CLIP VALUES OF THE AVERAGE SUB-BLOCK | 512 |

| USE THE AVERAGE SUB-BLOCK AS A PREDICTOR FOR THE TARGET SUB-BLOCK | 514 |

FIG. 5

600

DEFINE TARGET TEMPLATE FOR TARGET SUB-BLOCK — 602

IDENTIFY M BEST MATCHING CANDIDATE TEMPLATES IN SEARCH REGION — 604

COMPUTE PROJECTION OF TARGET TEMPLATE ONTO THE SUBSPACE SPANNED BY THE M BEST CANDIDATE TEMPLATES FROM THE PROJECTION — 606

FIND COEFFICIENTS CORRESPONDING TO THE M BEST CANDIDATE TEMPLATES FROM THE PROJECTION — 608

COMPUTE WEIGHTED AVERAGE OF SUB-BLOCKS ASSOCIATED WITH THE M CANDIDATE TEMPLATES BASED ON THE RESPECTIVE COEFFICIENTS — 610

ROUND AND CLIP VALUES OF THE AVERAGE SUB-BLOCK — 612

USE THE AVERAGE SUB-BLOCK AS A PREDICTOR FOR THE TARGET SUB-BLOCK — 614

FIG. 6

FIG. 7

EP 2 237 217 A2

<u>800</u>

```
┌─────────────────────────────────────────┐
│  DETERMINE PREDICTOR SUB-BLOCK IN SEARCH │ ⌐─── 802
│  REGION FOR TARGET SUB-BLOCK USING       │
│  TEMPLATE MATCHING                       │
└─────────────────────────────────────────┘
                    │
                    ▼
┌─────────────────────────────────────────┐
│  OBTAIN ERROR BETWEEN THE CANDIDATE      │ ⌐─── 804
│  TEMPLATE FOR THE PREDICTOR SUB-BLOCK AND│
│  THE TARGET TEMPLATE                     │
└─────────────────────────────────────────┘
                    │
                    ▼
┌─────────────────────────────────────────┐
│  SELECT STRENGTH FOR LOW PASS FILTER     │ ⌐─── 806
└─────────────────────────────────────────┘
                    │
                    ▼
┌─────────────────────────────────────────┐
│  FILTER PREDICTOR SUB-BLOCK USING LOW PASS│ ⌐─── 808
│  FILTER                                  │
└─────────────────────────────────────────┘
```

FIG. 8